# EUROPÄISCHE PATENTSCHRIFT

(11) **EP 1 514 668 B1**
(45) Veröffentlichungstag und Bekanntmachung des Hinweises auf die Patenterteilung: **04.01.2006**
(21) Anmeldenummer: 04018910.2
(22) Anmeldetag: 10.08.2004
(51) Int. Cl.: B29C 51/26, B29C 51/04

(54) **Formwerkzeug zum Tiefziehen von Behältern aus thermoplastischem Kunststoff**
Apparatus for thermoforming of thermoplastic containers
Appareil pour thermoformage des récipients thermoplastiques

(30) Priorität: 22.08.2003 DE 10338603
(43) Veröffentlichungstag der Anmeldung: 16.03.2005
(73) Patentinhaber: Adolf Illig GmbH & Co. KG, 74081 Heilbronn (DE)
(72) Erfinder: Trautwein, Herbert, 71737 Kirchberg (DE)

(56) Entgegenhaltungen:
- EP-A- 0 891 843
- EP-A- 1 297 943
- PATENT ABSTRACTS OF JAPAN Bd. 1998, Nr. 01, 30. Januar 1998 (1998-01-30) & JP 9 234696 A (NGK INSULATORS LTD), 9. September 1997 (1997-09-09)

## Beschreibung

Die Erfindung geht aus von einem Formwerkzeug nach dem Oberbegriff des Anspruches 1. Mit diesem werden aus einer erwärmten Folienbahn aus thermoplastischem Kunststoff mittels Druckluft Behälter tiefgezogen und ggf. ausgestanzt.

Aus der EP 1 297 943 A1 ist ein derartiges Formwerkzeug bekannt, bei dem in jedem Niederhalter ein Vorstrecker und zwischen dem Vorstrecker und dem Boden des Niederhalters ein als Verdichterkolben bezeichneter Sperrkolben gleitend und dichtend geführt ist. Die Druckluft zur Formung der Behälter wird entweder zwischen Vorstrecker und Sperrkolben eingeleitet, sodass der Raum hinter dem Sperrkolben nicht mit Formluft gefüllt werden muss, folglich Formluft eingespart werden kann. Oder vorzugsweise wird überhaupt keine Formluft zugeführt, da der Sperrkolben als Verdichterkolben wirken soll und durch seine Verschiebung den Formdruck aufbaut.
Da die Bewegungen von Vorstrecker und Sperrkolben nicht synchron zueinander ablaufen sollen, ist für jede Bewegung ein eigener Antrieb vorgesehen. Dies ist nachteilig, weil zwei Antriebe hohe Kosten verursachen. Zudem ist im Bereich der oberen Werkzeughälfte wenig Platz um zwei Antriebe unterzubringen, die eine hohe Kraft aufbringen müssen, um den Formdruck in der Größenordnung von 6 bar aufbringen zu können, und zwar in einer sehr kurzen Zeit in der Größenordnung von 0,2 Sekunden, bei einem Weg von ca. 100 mm.

Die Druckschrift EP 0 891 843 A2 zeigt ein Schneidwerkzeug zum Lochen von Werkstücken aus kaltem thermoplastischem Kunststoff, das eine Niederhalteplatte aufweist, die an einem Lochstempel begrenzt verschiebbar gehalten ist. Das Schneidwerkzeug weist keinen separaten Anschlag auf, da die Niederhalteplatte direkt mit dem thermoplastischen Kunststoff in Kontakt kommt und dadurch der Hub der Niederhalteplatte begrenzt wird.
Ein Kontakt eines Anschlages oder eines Teiles, das diese Funktion verkörpert, mit dem erwärmten Kunststoff bei einem Formwerkzeug zum Tiefziehen von Behältern ist für den Tiefziehprozess nachteilig, da dadurch der erwärmte Kunststoff vor dem Tiefziehprozess abgekühlt, evtl. seine Oberflächenstruktur beeinflusst, z. B. zerkratzt wird und die Tiefziehbarkeit negativ beeinflusst wird.

Der Erfindung liegt die Aufgabe zugrunde, die geschilderten Nachteile des Standes der Technik zu überwinden und unter Einsatz nur eines Antriebes eine Relatiwerschiebung zwischen Vorstrecker und Sperrkolben durchführen zu können, wobei der Anschlag, der die Verschiebung des Sperrkolbens begrenzt, nach einer bestimmten gemeinsamen Verschriebung von Streckhelfern und Sperrkolben aus dem Oberteil heraus auf eine Kopfplatte trifft, gemäß der Lösung des Anspruchs 1, und somit nicht mit dem erwärmten thermoplastischen Kunststoff in Berührung kommt. Auf diese Weise werden Kosten und Einbauraum gespart und der erwärmte thermoplastische Kunststoff wird nicht abgekühlt, seine Oberfläche wird nicht beschädigt und es entstehen qualitativ gleichmäßige Behälter.

Weitere bevorzugte Ausgestaltungen der Erfindung ergeben sich aus den übrigen, in den Unteransprüchen genannten Merkmalen.

Das Formwerkzeug ist anhand der schematischen Zeichnungen näher beschrieben. Es zeigt:
- Figur 1: einen Querschnitt durch das Formwerkzeug in geschlossener Stellung vor Einleitung des Tiefziehvorganges.
- Figur 2: denselben Querschnitt nach teilweiser mechanischer Vorstreckung der Folienbahn durch den Streckhelfer.
- Figur 3: denselben Querschnitt nach Abschluss der mechanischer Vorstreckung und vor der Aufwärtsbewegung von Streckhelfer und Sperrkolben.
- Figur 4: denselben Querschnitt nach der Aufwärtsbewegung von Streckhelfer und Sperrkolben vor dem Öffnen des Formwerkzeuges.

Das Formwerkzeug besteht aus dem Oberteil 1 und dem Unterteil 2. Letzteres umfasst eine Grundplatte 3, einen Kühlblock 4 und in diesen pro Formnest eingesetzte Formeinsätze 5 einreihig wie dargestellt oder mehrreihig mit der Gestalt der herzustellenden Behälter 6. Die Formeinsätze 5 sind einteilig oder zweiteilig ausgebildet und tragen bei kombiniert formenden und stanzenden Formwerkzeugen an der oberen, der Folienbahn 7 zugewandtem Seite, eine Schnittkante 8. Eine Kühlung der Formeinsätze 5 erfolgt über die Kammer 9 zwischen Kühlblock 4 und Außenform der Formeinsätze 5 in bekannter Weise. Zum Ausschieben der Behälter 6 aus den Formeinsätzen 5 dient ein verschiebbarer Formboden 10.

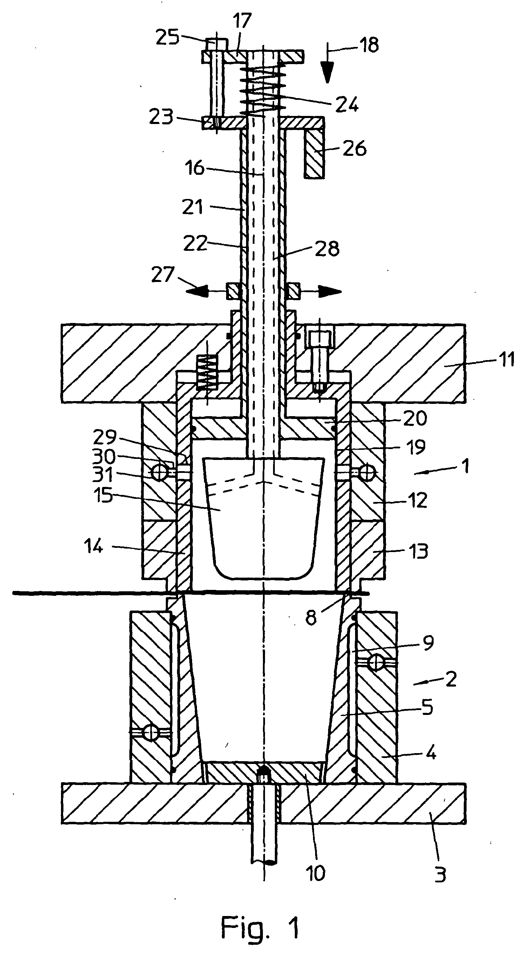

Das Oberteil 1 setzt sich zusammen aus einer Kopfplatte 11, einer Zwischenplatte 12, der Matrize 13 und einem in jedem Formnest angeordneten Niederhalter 14 mit einem in diesem verschiebbaren Streckhelfer 15. Jeder Niederhalter 14 ist federnd nachgiebig gehalten und schiebt nach dem Ausstanzen der Behälter 6 und nach dem Öffnen des Formwerkzeuges diese aus der Matrizenbohrung. Die Streckhelfer 15 sind jeweils über eine Stange 16 mit einer gemeinsamen Halteplatte 17 verbunden. Diese kann über eine als Pfeil 18 dargestellte Antriebseinrichtung verschoben werden.
Hinter jedem Streckhelfer 15 ist ein Sperrkolben 20 angeordnet, der gleitend und dichtend in der Bohrung 19 des Niederhalters 14 geführt ist. Der Sperrkolben 20 geht über in einen Schaft 21 , in dessen mittiger Bohrung 22 die Stange 16 des Streckhelfers 15 verläuft. Alle Schäfte 21 der in den Formnestern angeordneten Sperrkolben 20 sind an einer gemeinsamen Halteplatte 23 befestigt. Die beiden Halteplatten 17, 23 sind über Federn 24 und Halteschrauben 25 auf Abstand nachgiebig gehalten, wenn sie sich in - bezogen auf das Oberteil 1 - eingefahrener Stellung (siehe Figur 1) befinden.

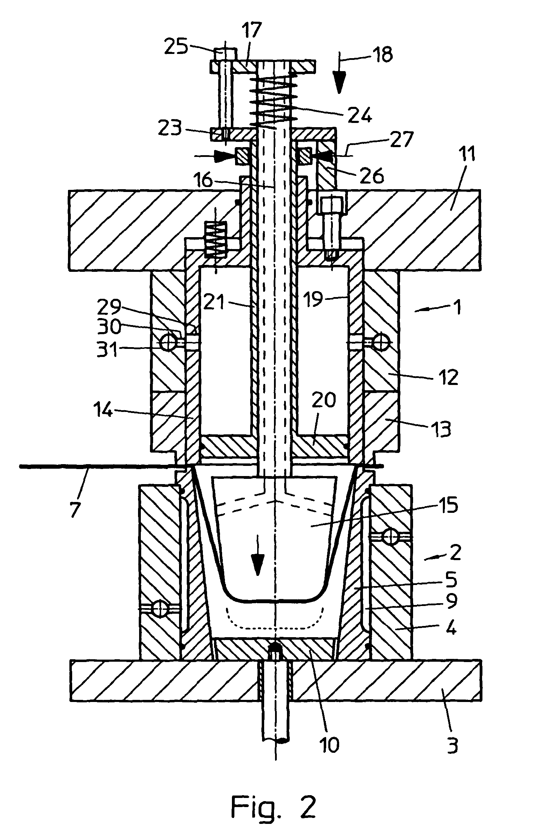

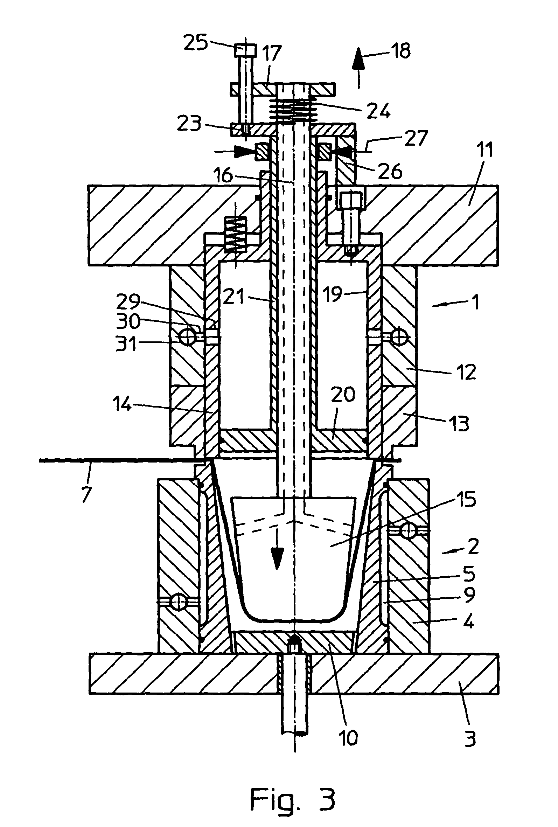

An der Halteplatte 23 ist ein Anschlag 26 angeordnet, der nach einer bestimmten gemeinsamen Verschiebung von Streckhelfer 15 und Sperrkolbens 20 aus dem Oberteil 1 heraus auf die Kopfplatte 11 trifft. Lage in Figur 2 dargestellt. Über den Antrieb 18 ist eine Weiterfahrt der Streckhelfer 15 möglich, indem sich die Federn 24 zusammendrücken - Lage in Figur 3 dargestellt. Die Formluft wird bereits bei Stillstand der Sperrkolben 20 zugeführt. Um die sich hierdurch ergebende Kraft aufzufangen ist eine Halteeinrichtung in Form einer als Pfeil dargestellten Sperreinrichtung 27 in verschiedenen Ausführungen möglich. Diese Sperreinrichtung 27 kann formschlüssig in Form von Verrastungselementen oder kraftschlüssig wirken, und zwar entweder auf die Schäfte 21 oder auf die Halteplatte 23.

Verfahrensmäßig findet folgender Ablauf statt:

Nach dem Eintransport eines Abschnittes der erwärmten Folienbahn 7 zwischen die geöffneten Werkzeughälften 1, 2 wird dieses geschlossen. (Lage in Fig. 1 dargestellt). Jetzt werden gleichzeitig alle Streckhelfer 15 und alle Sperrkolben 20 über die Antriebseinrichtung 18 nach unten bewegt bis in die Stellung, die in Figur 2 dargestellt ist, in der der Anschlag 26 auf die Kopfplatte 11 trifft. Gleichzeitig mit der nun einsetzenden Zufuhr der Formluft über die Bohrung 28 in der Stange 16 wird ggf. die Sperreinrichtung 27 aktiviert, sodass sie die Sperrkolben 20 arretiert. Es erfolgt eine Weiterfahrt der Streckhelfer 15 durch den Antrieb 18 bei stehendem Sperrkolben 20 während der Formluftzufuhr bis in die in Figur 3 dargestellte Lage. Die Formluft erzeugt dabei nur eine geringe Gegenkraft auf die Streckhelfer 15 als Produkt aus Druck und Querschnitt der Stange 16, die von der Antriebseinrichtung 18 aufgebracht werden muss.

Nach dem Ausformen der Behälter 6 fahren zunächst die Streckhelfer 15 und danach gemeinsam Streckhelfer 15 und Sperrkolben 20 nach oben, die Formluft wird über die Bohrung 28 und/oder über Bohrungen 29, 30, 31, die in Niederhalter 14 und Zwischenplatte 11 angeordnet sind, abgeleitet. Die Ableitung über diese Bohrungen 29, 30, 31 hat sich als günstig erwiesen, einerseits durch die Durchströmung des Innenraumes und die dabei eintretende gute Kühlwirkung auf die Behälteroberfläche. Zum anderen läuft die Ableitung der Formluft rasch ab, was sich positiv auf die Taktzahl auswirkt. Dabei sind die Bohrungen 29, 30, 31 so angeordnet, dass der zurückfahrende Sperrkolben 20 die Bohrung 29 überfährt und damit die Entweichung der Formluft automatisch freigibt.

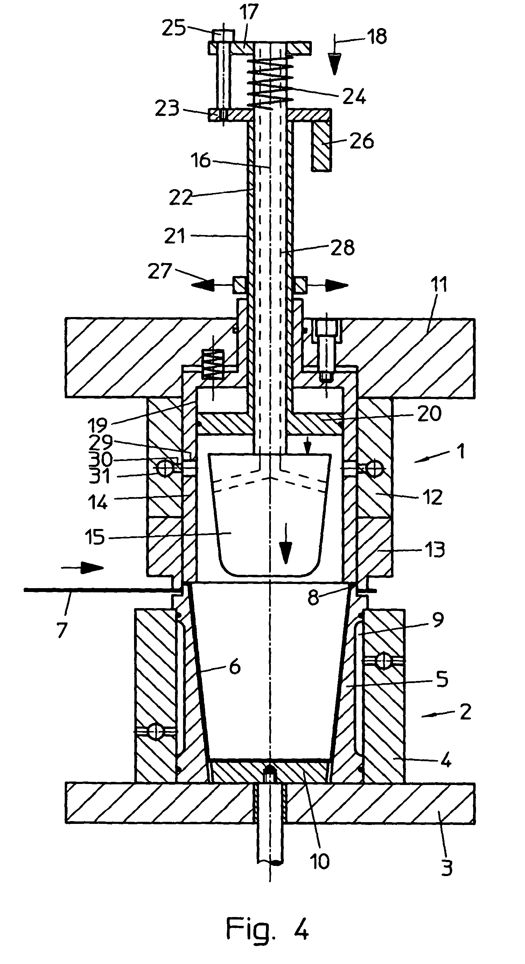

Nach dem Auskühlen der Behälter 6 werden diese bei kombiniert formenden und stanzenden Formwerkzeugen ausgestanzt (Lage in Figur 4 dargestellt) und bei wieder geöffnetem Formwerkzeug ausgeworfen. Bei einem reinen Formwerkzeug bleiben sie mit der Folienbahn 7 verbunden und werden Nachfolgeeinrichtungen zugeführt.

## Patentansprüche

1. Formwerkzeug zum Tiefziehen von Behältern (6) aus einer erwärmten Folienbahn (7) aus thermoplastischem Kunststoff, bestehend aus Oberteil (1) und Unterteil (2), bei dem das Unterteil (2) die Formeinsätze (5) und das Oberteil (1) pro Formnest einen Niederhalter (14) mit einer Bohrung (19) trägt, mit einem im Niederhalter (14) verschiebbaren, mit einer ersten Halteplatte (17) verbundenen Streckhelfer (15) und einem in der Bohrung (19) des Niederhalters (14) gleitend und dichtend geführten Sperrkolben (20), der über einen Schaft (21) mit einer zweiten Halteplatte (23) verbunden ist, wobei die erste Halteplatte (17) mit einer Antriebseinrichtung (18) in Wirkverbindung steht, **dadurch gekennzeichnet, dass** die Halteplatten (17, 23) federnd zueinander auf Abstand gehalten werden und die zweite Halteplatte (23) einen Anschlag (26) trägt, der so angeordnet ist, dass er nach einer bestimmten gemeinsamen Verschiebung von Streckhelfern (15) und Sperrkolben (20) aus dem Oberteil heraus auf eine Kopfplatte (11) trifft und den Hub der Sperrkolben (20) begrenzt, während die Streckhelfer (15) sich darüber hinaus weiterbewegen können.

2. Formwerkzeug nach Anspruch 1, **dadurch gekennzeichnet, dass** die Sperrkolben (20) mit einer Sperreinrichtung (27) arretierbar sind.

3. Formwerkzeug nach Anspruch 2, **dadurch gekennzeichnet, dass** die Sperreinrichtung (27) direkt auf einen oder mehrere der Schäfte (21) wirkt.

4. Formwerkzeug nach Anspruch 2, **dadurch gekennzeichnet, dass** die Sperreinrichtung (27) an der die Schäfte (21) verbindenden Halteplatte (23) wirksam ist.

## Claims

1. A moulding tool for deep-drawing containers (6) from a heated foil strip (7) made of thermoplastic synthetic material, comprising an upper part (1) and a lower part (2), wherein the lower part (2) bears the mould inserts (5) and the upper part (1) per mould cavity bears a blank holder (14) with a bore (19), with a connected extension helper (15) mobile in the blank holder (14), with a first retaining plate (17) and a blocking piston (20) guided to glide and seal in the bore (19) of the blank holder (14), which is connected via a shaft (21) to a second retaining plate (23), whereby the first retaining plate (17) is in active connection with a drive device (18), **characterised in that** the retaining plates (17, 23) are held resiliently at a distance from one another and the second retaining plate (23) bears a stop (26), which is arranged such that, following a certain common shift of extension helpers (15) and blocking piston (20) out of the upper part, it strikes against a head plate (11) and delimits the stroke of the blocking piston (20), while the extension helper (15) can also move on further.

2. The moulding tool as claimed in Claim 1, **characterised in that** the blocking piston (20) can be stopped with a blocking mechanism (27).

3. The moulding tool as claimed in Claim 2, **characterised in that** the blocking mechanism (27) acts directly on one or more of the shafts (21).

4. The moulding tool as claimed in Claim 2, **characterised in that** the blocking mechanism (27) acts on the retaining plate (23) connecting the shafts (21).

## Revendications

1. Outil de formage en vue d'emboutir des récipients (6) réalisé à partir d'une bande de feuilles (7) chauffée en plastique thermoplastique, constitué d'une partie supérieure (1) et d'une partie inférieure (2), dans lequel la partie inférieure (2) porte les inserts de formage (5) et la partie supérieure (1) porte par groupe de formage un serre-flan (14) avec un alésage (19), avec un auxiliaire d'étirement (15) déplaçable dans le serre-flan (14), relié à une première plaque support (17) et un piston de blocage (20) coulissant dans l'alésage (19) du serre-flan (14) et guidé de manière étanche qui est relié par l'intermédiaire d'un arbre (21) à une deuxième plaque support (23), la première plaque support (17) étant en liaison coopérante avec un dispositif d'entraînement (18), **caractérisé en ce que** les plaques support (17, 23) sont maintenues de manière élastique l'une par rapport à l'autre à distance et la deuxième plaque support (23) porte une butée (26) qui est disposée de sorte qu'elle atteint après un certain déplacement commun des auxiliaires d'étirement (15) et des pistons de blocage (20) à partir de la partie supérieure une plaque de tête (11) et limite la course des pistons de blocage (20) tandis que les auxiliaires d'étirement (15) peuvent continuer de se déplacer.

2. Outil de formage selon la revendication 1, **caractérisé en ce que** les pistons de blocage (20) peuvent être bloqués avec un dispositif de blocage (27).

3. Outil de formage selon la revendication 2, **caractérisé en ce que** le dispositif de blocage (27) agit directement sur un ou plusieurs des arbres (21).

4. Outil de formage selon la revendication 2, **caractérisé en ce que** le dispositif de blocage (27) est actif sur la plaque support (23) reliant les arbres (21).
